# EUROPEAN PATENT APPLICATION

(11) **EP 4 105 148 A1**
(43) Date of publication of application: **21.12.2022**
(21) Application number: 21753494.0
(22) Date of filing: 29.01.2021
(51) Int. Cl.: B65G 11/00, B65G 47/44, B65G 47/53

(54) **RECEIVING PLATE, TRANSFER CHUTE, CONVEYING APPARATUS, AND CONVEYING METHOD**

(30) Priority: 10.02.2020 JP 2020020847
(71) Applicant: JFE Steel Corporation, Tokyo 100-0011 (JP)
(72) Inventor: CAO Ningyuan, Tokyo 100-0011 (JP); NISHINA Yoshiaki, Tokyo 100-0011 (JP); SADAMORI Hiroki, Tokyo 100-0011 (JP)
(74) Representative: Hoffmann Eitle
(86) International application number: PCT/JP2021/003417
(87) International publication number: WO 2021/161820

(57) **Abstract**

Disclosed are a receiving plate and a transfer section chute that can suppress adhesion of conveyed materials. A receiving plate (1) includes a curved-plate-like portion (19) having a receiving surface (19a) configured to receive a conveyed material (2), in which the curved-plate-like portion (19) is curved to form a single convex portion facing in an opposite direction from a conveying direction (D1) of an upstream conveyor (3) in a horizontal cross section.

## Description

### TECHNICAL FIELD

This disclosure relates to a receiving plate, a transfer section chute, a conveying apparatus, and a conveying method.

### BACKGROUND

For example, as described in JPH11-189328A (PTL 1), it is known that a receiving plate is provided in a transfer section of a belt conveyor where a conveyed material is dropped from an upstream conveyor and transferred to a downstream conveyor, and configured to change a direction in which the conveyed material fall by receiving the conveyed material dropped from the upstream conveyor. The receiving plate allows the conveyed material to be properly transferred from the upstream conveyor to the downstream conveyor. Such a receiving plate is usually arranged in the housing of a transfer section chute that covers the transfer section.

### CITATION LIST

### Patent Literature

### PTL 1: JPH11-189328A

### SUMMARY

### (Technical Problem)

Conventionally, a problem has been pointed out that when an adherent conveyed material is received by a receiving plate, the conveyed material adhere to the receiving plate and accumulate on it. When the conveyed material is iron ore, coal, or other steelmaking raw material that contains water due to exposure to rain during field loading, and so on, the above problem is particularly noticeable due to their high adhesiveness. If a conveyed material accumulate on a receiving plate, for example, the position of the conveyed material falling on the downstream conveyor is shifted, and the conveyed material is conveyed unevenly, or unbalanced to one side in the width direction, on the downstream conveyor. This increases the load on the belt of the downstream conveyor, causing malfunctions such as reduced belt life and spillage of the conveyed material from the downstream conveyor.

It would thus be helpful to provide a receiving plate, a transfer section chute, a conveying apparatus, and a conveying method that can suppress adhesion of conveyed materials.

### (Solution to Problem)

We thus provide the following.
1. A receiving plate provided in a transfer section of a belt conveyor where a conveyed material is dropped from an upstream conveyor and transferred to a downstream conveyor, and configured to change a direction in which the conveyed material fall by receiving the conveyed material dropped from the upstream conveyor, the receiving plate comprising: a curved-plate-like portion having a receiving surface to configured to receive the conveyed material, wherein the curved-plate-like portion is curved to form a single convex portion facing in an opposite direction from a conveying direction of the upstream conveyor in a horizontal cross section.
2. The receiving plate according to aspect 1, wherein the receiving surface of the curved-plate-like portion is a cylindrical or elliptic cylindrical surface centered on a predetermined axis.
3. The receiving plate according to aspect 2, wherein the predetermined axis is positioned in a vertical plane passing through a widthwise center of the upstream conveyor.
4. The receiving plate according to any one of aspects 1 to 3, wherein the conveyed material is received only by the curved-plate-like portion.
5. The receiving plate according to any one of aspects 1 to 4, wherein the curved-plate-like portion is positioned at least within a width of the upstream conveyor in top view.
6. The receiving plate according to any one of aspects 1 to 5, being symmetrical about a vertical plane passing through a widthwise center of the upstream conveyor.
7. The receiving plate according to any one of aspects 1 to 6, configured to form, as a whole, a single convex portion facing in an opposite direction from a conveying direction of the upstream conveyor in a horizontal cross section.
8. A transfer section chute comprising: a housing configured to cover a transfer section of a belt conveyor where a conveyed material is dropped from an upstream conveyor and transferred to a downstream conveyor; and a receiving plate arranged in the housing and configured to change a direction in which the conveyed material fall by receiving the conveyed material dropped from the upstream conveyor, wherein the receiving plate comprises a curved-plate-like portion having a receiving surface configured to receive the conveyed material, and wherein the the curved-plate-like portion is curved to form a single convex portion facing in an opposite direction from a conveying direction of the upstream conveyor in a horizontal cross section.
9. A conveying apparatus comprising the transfer section chute as recited in aspect 8.
10. A conveying method comprising changing, by a receiving plate provided in a transfer section of a belt conveyor where a conveyed material is dropped from an upstream conveyor and transferred to a downstream conveyor, a direction in which the conveyed material fall by receiving the conveyed material dropped from the upstream conveyor by the receiving plate, wherein the receiving plate comprises a curved-plate-like portion having a receiving surface configured to receive the conveyed material, and wherein the curved-plate-like section is curved to form a single convex portion facing in an opposite direction from a conveying direction of the upstream conveyor in a horizontal cross section.

### (Advantageous Effect)

According to the present disclosure, it is possible to provide a receiving plate, a transfer section chute, a conveying apparatus, and a conveying method that can suppress adhesion of conveyed materials.

### BRIEF DESCRIPTION OF THE DRAWINGS

In the accompanying drawings:
FIG. 1 is a perspective view illustrating a conveying apparatus comprising a transfer section chute according to an embodiment of the present disclosure;
FIG. 2 is a cross-sectional view of the conveying apparatus illustrated in FIG. 1, taken along a vertical plane passing through a widthwise center of the upstream conveyor;
FIG. 3 is a top view of the conveying apparatus illustrated in FIG. 1, without the housing;
FIG. 4 is a horizontal cross-sectional view of the receiving plate illustrated in FIG. 1;
FIG. 5 is a cross-sectional view along a plane perpendicular to a central axis of the curved-plate-like portion of the receiving plate illustrated in FIG. 1;
FIG. 6 is a top view of a variation of the conveying apparatus illustrated in

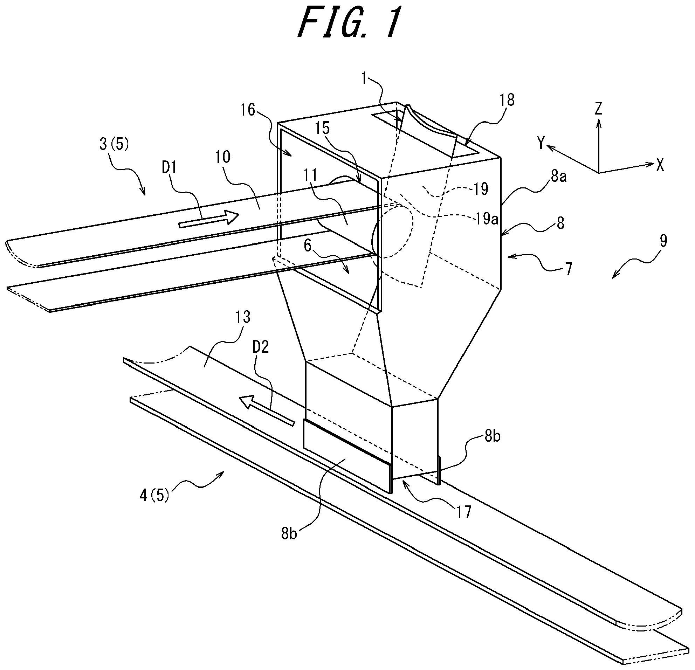

FIG. 1, without the housing;

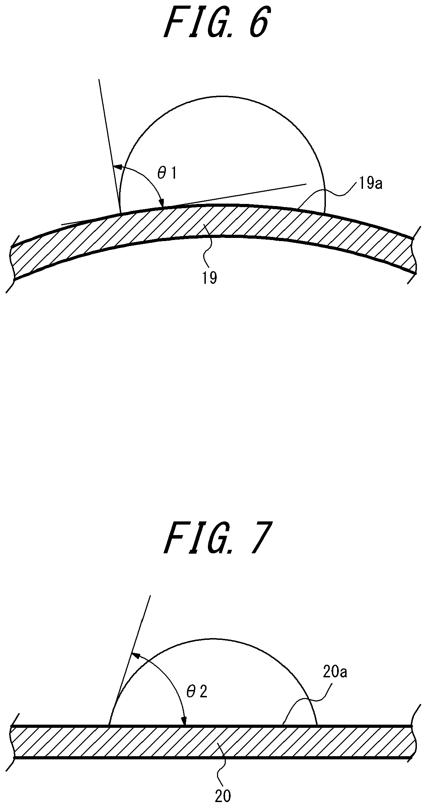

FIG. 7 illustrates a contact angle of water on the curved-plate-like portion;

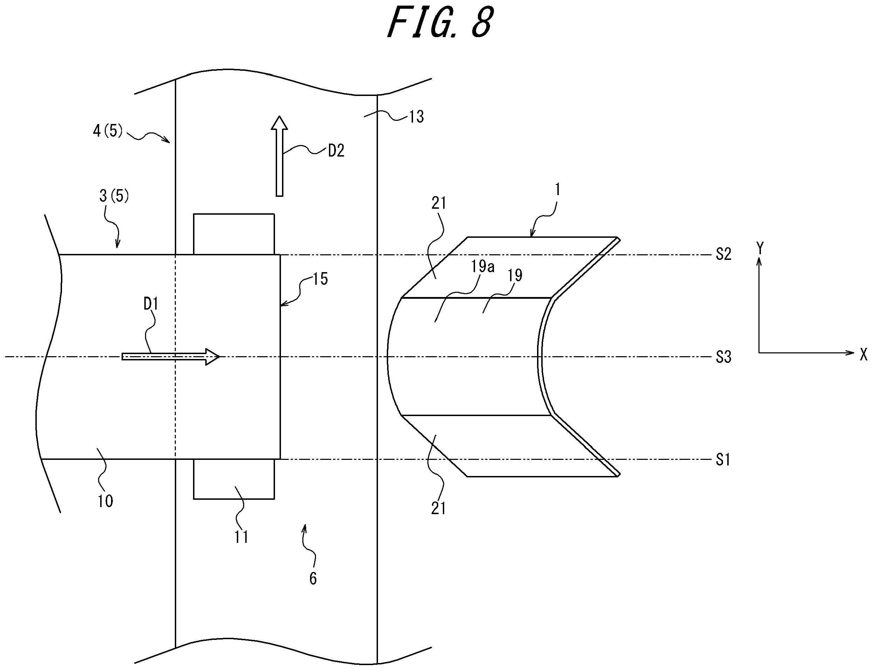

FIG. 8 illustrates a contact angle of water on a flat plate; and

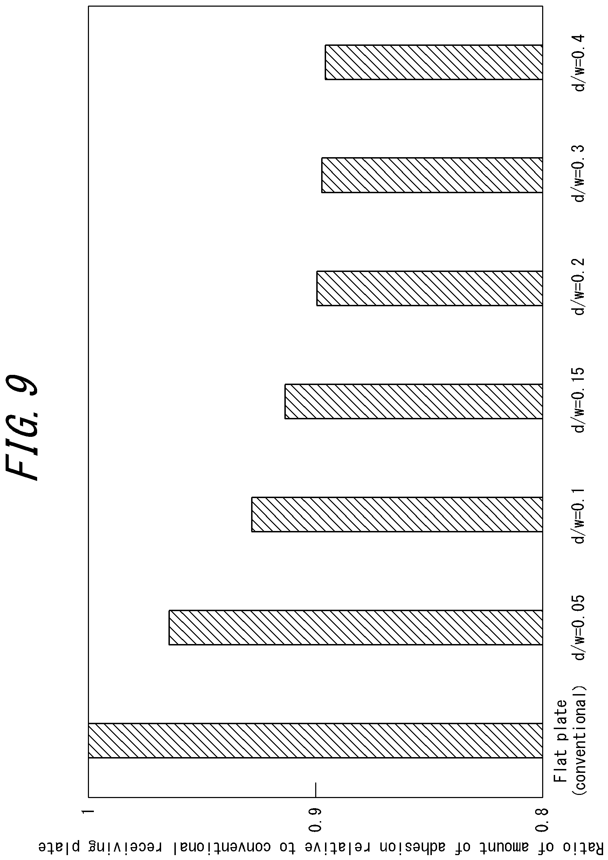

FIG. 9 illustrates the evaluation results of the amount of adhesion on the receiving plate illustrated in FIG. 1.

### DETAILED DESCRIPTION

Embodiments of the present disclosure will be described below with reference to the accompanying drawings.

As illustrated in FIGS. 1 to 5, in one embodiment of the present disclosure, a receiving plate 1 is configured to change, in a transfer section 6 of a belt conveyor 5 where a conveyed material 2 is dropped from an upstream conveyor 3 and transferred to a downstream conveyor 4, a direction in which the conveyed material fall by receiving the conveyed material 2 dropped from the upstream conveyor 3. In this embodiment, a transfer section chute 7 comprises: a housing 8 configured to cover the transfer section 6; and the receiving plate 1 arranged in the housing 8. The belt conveyor 5 includes the upstream conveyor 3 and the downstream conveyor 4. In this embodiment, the belt conveyor 5 and the transfer section chute 7 constitute a conveying apparatus 9. A conveying method according to this embodiment comprises changing, by the receiving plate 1 provided in the transfer section 6, a direction in which the conveyed material 2 fall by receiving the conveyed material 2 dropped from the upstream conveyor 3 by the receiving plate 1. In this embodiment, the conveyed material 2 is a water-containing material that has adhesive properties due to the presence of water. For example, the conveyed material 2 is iron ore, coal, or other steelmaking raw material that contains water due to exposure to rain during field loading, and so on. However, the conveyed material 2 is not limited to a water-containing material as long as it has adhesive properties.

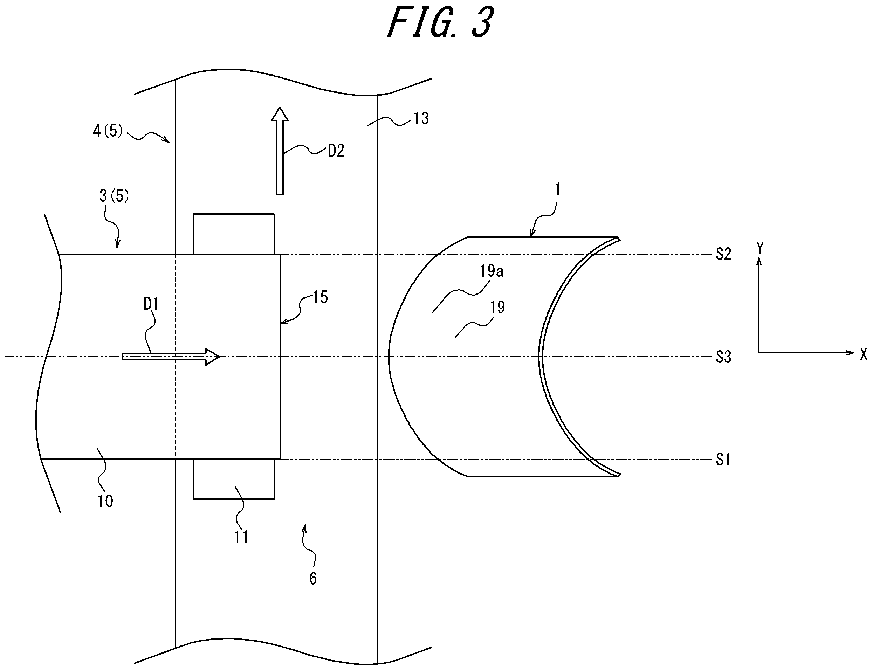

The upstream conveyor 3 includes a belt 10 made of cloth, synthetic resin, rubber, or the like, a driver 1 such as a pulley configured to drive the belt 10, and a guide 12 such as a roller configured to guide the belt 10. The downstream conveyor 4 includes a belt 13 made of cloth, synthetic resin, rubber, or the like, a driver such as a pulley (not illustrated) configured to drive the belt 13, and a guide 14 such as a roller configured to guide the belt 13. In FIG. 1, the guide 12 of the upstream conveyor 3 and the guide of the downstream conveyor 4 are not illustrated. The upstream conveyor 3 has an unloading end 15 that is positioned above the downstream conveyor 4 in the transfer section 6. In FIGS. 1 and 3, a conveying direction D1 of the upstream conveyor 3 and a conveying direction D2 of the downstream conveyor 4 are indicated by white arrows. Either or both of the conveying direction D1 of the upstream conveyor 3 and the conveying direction D2 of the downstream conveyor 4 may be horizontal or inclined vertically upward or downward from the horizontal. As illustrated in FIG. 3, the conveying direction D2 of the downstream conveyor 4 is rotated 90° counterclockwise relative to the conveying direction D1 of the upstream conveyor 3 in top view. However, it may be rotated at any other angle such as 270°, 0°, or 180°. The shape of the housing 8 of the transfer section chute 7 may be changed according to this angle. In this embodiment, the up and down directions mean the directions along the vertical direction.

In this embodiment, the X-axis positive direction is the direction that coincides with the conveying direction D1 of the upstream conveyor 3 in a horizontal plane, the Y-axis positive direction is the direction rotated 90° counterclockwise relative to the X-axis positive direction in top view, and the Z-axis positive direction is the vertical-up direction.

The housing 8 includes a housing body 8a made of for example steel material, and two skirts 8b made of for example synthetic resin or rubber, provided at a lower end of the housing body 8a, and facing each other in the width direction of the downstream conveyor 4 (i.e., in the X-axis direction). However, the components of the housing 8 are not so limited. For example, the housing 8 may not have both skirts 8b. The housing 8 has an insertion port 16 into which the unloading end 15 of the upstream conveyor 3 is inserted, and a discharge port 17 configured to discharge the conveyed material 2 toward the upper surface of the downstream conveyor 4. However, the components of the housing 8 are not so limited. The housing 8 is configured to cover the transfer section 6 of the belt conveyor 5, making it possible to prevent the conveyed material 2 from spilling off the belt conveyor 5 in the transfer section 6.

The receiving plate 1 is arranged in the housing 8. The housing 8 has a through-hole 18 through which the receiving plate 1 passes, and the receiving plate 1 is arranged partially within the housing 8. However, the arrangement of the receiving plate 1 is not so limited. For example, the receiving plate 1 may be arranged entirely within the housing 8.

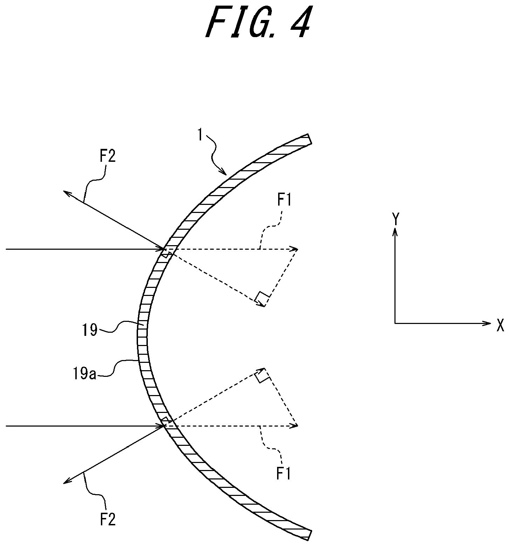

The receiving plate 1 comprises a curved-plate-like portion 19 having a receiving surface 19a configured to receive the conveyed material 2. The curved-plate-like portion 19 is curved to form a single convex portion facing in an opposite direction from the conveying direction D1 of the upstream conveyor 3 (i.e., facing in the X-axis negative direction) in a horizontal cross section (see FIG. 4).

Accordingly, when the receiving surface 19a receives the conveyed material 2 that is unloaded in the conveying direction D1 while falling from the unloading end 15 of the upstream conveyor 3, the repulsive force F2 against the impact force F1 from the conveyed material 2 can be reduced. In other words, since the receiving surface 19a is inclined at an angle relative to the conveying direction D1 in the horizontal cross section, the repulsive force F2 can be reduced compared to the conventional case where the receiving surface 19a is perpendicular to the conveying direction D1. The direction of inclination is not in the direction of agglomeration of the conveyed material 2 that hit the receiving surface 19a, but in the direction of divergence thereof (i.e., one part on the Y-axis positive direction side is inclined in the X-axis positive direction toward the Y-axis positive direction, and the other part on the Y-axis negative direction side is inclined in the X-axis positive direction toward the Y-axis negative direction).

The receiving surface 19a of the curved-plate-like portion 19 has higher water repellency, i.e., has a larger contact angle to water due to its curved shape, when compared to the surface 20a of the flat plate 20 (see FIG. 7). In other words, as illustrated in FIGS. 6 to 7, the contact angle of water at the receiving surface 19a of the curved-plate-like portion 19, θ1, is larger than the contact angle of water at the surface 20a of the flat plate 20, θ2. Accordingly, the receiving surface 19a of the curved-plate-like portion 19 is more difficult for the conveyed material 2 containing water or liquids other than water to adhere to its surface than the surface 20a of the flat plate 20.

Consequently, the curved-plate-like portion 19 thus configured can suppress adhesion of the conveyed material 2 to the receiving plate 1.

The materials and methods for forming the receiving plate 1 are not limited. However, for example, the receiving plate 1 is made of steel and is formed by roller machining of a single sheet of steel.

In this embodiment, the receiving plate 1 is configured to receive the conveyed material 2 only by the curved-plate-like portion 19. Accordingly, this configuration may efficiently suppress adhesion of the conveyed material 2 to the receiving plate 1. However, the configuration of the receiving plate 1 is not so limited. For example, the receiving plate 1 may be configured to receive the conveyed material 2 by the curved-plate-like portion 19 and two flat-plate-like portions 21, as in a variation illustrated in FIG. 8. In this variation, the flat-plate-like portions 21 are continuously connected to the respective ends of the curved-plate-like portion 19 in the width direction (i.e., Y-axis direction) of the upstream conveyor 3 in top view. In this variation, the receiving plate 1 is configured to form, as a whole, a single convex portion facing in an opposite direction from the conveying direction D1 of the upstream conveyor 3 in a horizontal cross section.

As illustrated in FIG. 4, in this embodiment, the receiving plate 1 is configured to form, as a whole, a single convex portion facing in an opposite direction from the conveying direction D1 of the upstream conveyor 3 in a horizontal cross section. Accordingly, this configuration may suppress adhesion of the conveyed material 2 to the receiving plate 1 in a more efficient way. However, the configuration of the receiving plate 1 is not so limited.

In this embodiment, the curved-plate-like portion 19 is positioned at least within the width of the upstream conveyor 3 in top view (see FIG. 3). In other words, the curved-plate-like portion 19 is positioned at least between a vertical plane on one widthwise end S1 and a vertical plane on the other widthwise end S2. The vertical plane on one widthwise end S1 is a vertical plane passing through one widthwise end of the upper surface of the belt 10 on which the conveyed material 2 is placed at the unloading end 15 of the upstream conveyor 3 (i.e., an end on the Y-axis negative direction side) and extending along the conveying direction D1. The vertical plane on the other widthwise end S2 is a vertical plane passing through the other widthwise end of the upper surface (i.e., an end on the Y-axis positive direction side) and extending along the conveying direction D1. Accordingly, this configuration allows the curved-plate-like portion 19 to receive the conveyed material 2 dropped from the upstream conveyor 3 in a more efficient way. However, the configuration of the receiving plate 1 is not so limited.

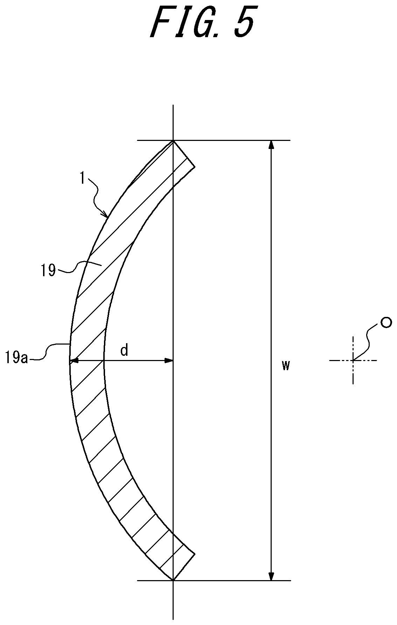

In this embodiment, the receiving surface 19a of the curved-plate-like portion 19 is a cylindrical surface centered on a predetermined axis, for example, a central axis O (see FIG. 5). In other words, the receiving surface 19a has an arc shape in a cross section perpendicular to the central axis O. Accordingly, this configuration may suppress adhesion of the conveyed material 2 to the receiving plate 1 in a more efficient way. The configuration of the receiving surface 19a of the curved-plate-like portion 19 is not so limited. For example, the receiving surface 19a may be an elliptic cylindrical surface centered on the central axis O (i.e., it may have an elliptical arc shape in a cross section perpendicular to the central axis O).

In this embodiment, the central axis O is positioned in a vertical plane on a widthwise center S3 (see FIG. 3), which is a vertical plane passing through the widthwise center of the upstream conveyor 3 (i.e., the center in the Y-axis direction). Accordingly, this configuration allows the curved-plate-like portion 19 to receive the conveyed material 2 dropped from the upstream conveyor 3 in a more efficient way. However, the configuration of the receiving plate 1 is not so limited.

In this embodiment, the receiving plate 1 is symmetrical about the vertical plane passing through the widthwise center of the upstream conveyor 3, i.e., the vertical plane on the widthwise center S3. Accordingly, the conveyed material 2 dropped from the upstream conveyor 3 can be repelled equally on both sides in the width direction by the receiving surface 19a of the curved-plate-like portion 19 to be transferred to the downstream conveyor 4. Consequently, the balance of loading onto the downstream conveyor 4, which is orthogonal to the upstream conveyor 3, can be improved (i.e., the unevenness of the conveyed material 2 in the width direction of the downstream conveyor 4 can be reduced). Therefore, the life of the downstream conveyor 4 can be extended and spillage of the conveyed material 2 from the downstream conveyor 4 can be reduced. However, the configuration of the receiving plate 1 is not so limited.

The aspect ratio d/w (see FIG. 5) of the receiving surface 19a of the curved-plate-like portion 19 in a cross section along a plane perpendicular to the central axis O of the curved-plate-like portion 19 can be set appropriately, taking into account the balance of the load on the downstream conveyor 4 and other factors. Where d is the length of the receiving surface 19a in the radial direction from the central axis O, and w is the length of the receiving surface 19a in a direction perpendicular to the radial direction from the central axis O.

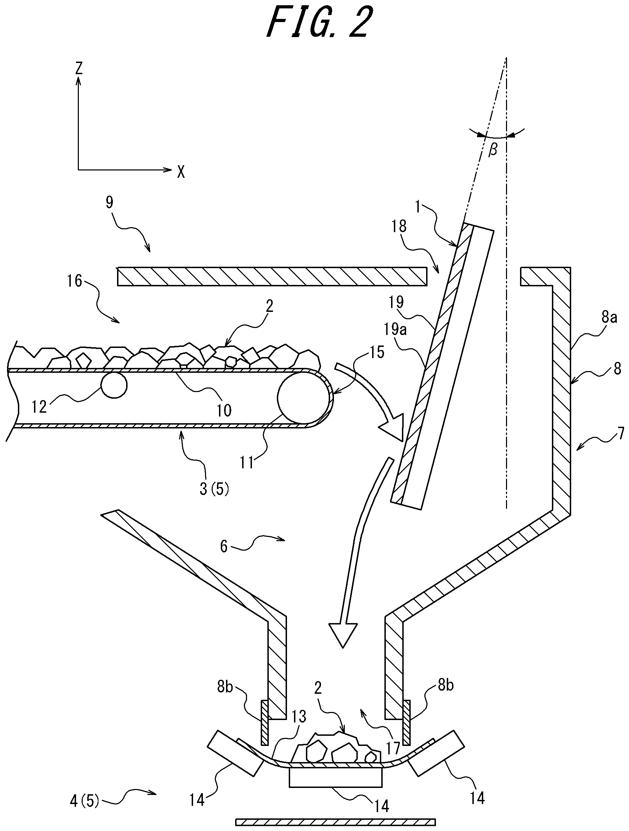

The size of an inclination angle β (see FIG. 2) of the receiving plate 1 relative to the vertical direction (i.e., the Z-axis direction), i.e., an angle formed by the central axis O (see FIG. 5) relative to the vertical direction, can be set appropriately, taking into account the balance of the load on the downstream conveyor 4 and other factors. The receiving plate 1 may be provided with an adjustable inclination angle β.

The above-described embodiments and variations thereof can be modified as needed within the scope of claims.

### EXAMPLES

As an example of the present disclosure, the effect of the receiving plates 1 illustrated in FIGS. 1 to 5 on the reduction of the amount of adhesion of the conveyed material 2 was verified by computer simulation. The results are presented in FIG. 9. FIG. 9 illustrates the effect of the present disclosure when the aspect ratio d/w was gradually increased from 0.05 to 0.4 as a ratio relative to a conventional flat receiving plate. Calculation was made with an inclination angle β of 15°. The moisture content of the conveyed material 2 was set to 10 %. It was confirmed that a 10 % improvement was obtained by increasing the aspect ratio d/w to 0.2.

### REFERENCE SIGNS LIST

- 1: Receiving plate
- 2: Conveyed material
- 3: Upstream conveyor
- 4: Downstream conveyor
- 5: Belt conveyor
- 6: Transfer section
- 7: Transfer section chute
- 8: Housing
- 8a: Housing body
- 8b: Skirt
- 9: Conveying apparatus
- 10: Belt
- 11: Driver
- 12: Guide
- 13: Belt
- 14: Guide
- 15: Unloading end
- 16: Insertion port
- 17: Discharge port
- 18: Through-hole
- 19: Curved-plate-like portion
- 19a: Receiving surface
- 20: Flat plate
- 20a: Surface
- 21: Flat-plate-like portion
- D1, D2: Conveying direction
- F1: Collision force
- F2: Repulsive force
- θ1, θ2: Contact angle
- S1: Vertical plane on one widthwise end
- S2: Vertical plane on other widthwise end
- S3: Vertical plane on widthwise center
- O: Central axis
- d: Length of receiving surface in radial direction from central axis
- w: Length of receiving surface in direction perpendicular to radial direction from central axis
- β: Inclination angle

## Claims

1. A receiving plate provided in a transfer section of a belt conveyor where a conveyed material is dropped from an upstream conveyor and transferred to a downstream conveyor, and configured to change a direction in which the conveyed material fall by receiving the conveyed material dropped from the upstream conveyor, the receiving plate comprising:
a curved-plate-like portion having a receiving surface to configured to receive the conveyed material,
wherein the curved-plate-like portion is curved to form a single convex portion facing in an opposite direction from a conveying direction of the upstream conveyor in a horizontal cross section.

2. The receiving plate according to claim 1, wherein the receiving surface of the curved-plate-like portion is a cylindrical or elliptic cylindrical surface centered on a predetermined axis.

3. The receiving plate according to claim 2, wherein the predetermined axis is positioned in a vertical plane passing through a widthwise center of the upstream conveyor.

4. The receiving plate according to any one of claims 1 to 3, wherein the conveyed material is received only by the curved-plate-like portion.

5. The receiving plate according to any one of claims 1 to 4, wherein the curved-plate-like portion is positioned at least within a width of the upstream conveyor in top view.

6. The receiving plate according to any one of claims 1 to 5, being symmetrical about a vertical plane passing through a widthwise center of the upstream conveyor.

7. The receiving plate according to any one of claims 1 to 6, configured to form, as a whole, a single convex portion facing in an opposite direction from a conveying direction of the upstream conveyor in a horizontal cross section.

8. A transfer section chute comprising:
a housing configured to cover a transfer section of a belt conveyor where a conveyed material is dropped from an upstream conveyor and transferred to a downstream conveyor; and
a receiving plate arranged in the housing and configured to change a direction in which the conveyed material fall by receiving the conveyed material dropped from the upstream conveyor,
wherein the receiving plate comprises a curved-plate-like portion having a receiving surface configured to receive the conveyed material, and
wherein the the curved-plate-like portion is curved to form a single convex portion facing in an opposite direction from a conveying direction of the upstream conveyor in a horizontal cross section.

9. A conveying apparatus comprising the transfer section chute as recited in claim 8.

10. A conveying method comprising changing, by a receiving plate provided in a transfer section of a belt conveyor where a conveyed material is dropped from an upstream conveyor and transferred to a downstream conveyor, a direction in which the conveyed material fall by receiving the conveyed material dropped from the upstream conveyor by the receiving plate,
wherein the receiving plate comprises a curved-plate-like portion having a receiving surface configured to receive the conveyed material, and
wherein the curved-plate-like section is curved to form a single convex portion facing in an opposite direction from a conveying direction of the upstream conveyor in a horizontal cross section.
